# EUROPÄISCHE PATENTANMELDUNG

(11) **EP 3 415 311 A1**
(43) Veröffentlichungstag der Anmeldung: **19.12.2018**
(21) Anmeldenummer: 17176028.3
(22) Anmeldetag: 14.06.2017
(51) Int. Cl.: B32B 27/08, B32B 27/34, B32B 7/12, B32B 27/36, B32B 3/26

(54) **OBERFLÄCHENFOLIE**

(71) Anmelder: Dr. Schneider Kunststoffwerke GmbH, 96317 Kronach-Neuses (DE)
(72) Erfinder: DOHE, Dieter, 49525 Lengerich (DE); PFEIFER, Gerald, 7083 Purbach am Neusiedler See (AT); GORNIK, Christian, 2491 Neufeld (AT); SCHMIDT, Klaus, 95362 Kupferberg (DE); SCHELLER, Ronny, 96450 Coburg (DE)

(57) **Zusammenfassung**

Oberflächenfolie (1) mit einer Außenschicht (2) und einer mit der Außenschicht (2) verbundenen Innenschicht (3), wobei die Außenschicht (2) aus einem Polyamidmaterial besteht.

## Beschreibung

Die vorliegende Erfindung betrifft eine Oberflächenfolie mit den Merkmalen des Oberbegriffs des Anspruchs 1 sowie ein Trägerteil mit einer solchen Oberflächenfolie.

Oberflächenfolien sollen insbesondere kratz- und medienbeständig sein und umfassen typischerweise eine Außenschicht und eine mit der Außenschicht verbundene Innenschicht, wobei die Außenschicht die Oberflächenfolie nach außen bzw. zur Umgebung hin begrenzt. Eine Außenoberfläche der Außenschicht stellt dabei die äußere Begrenzung der Oberflächenfolie nach außen bzw. zur Umgebung hin dar und ist daher in der Endanwendung äußeren Einflüssen ausgesetzt. Die Innenschicht bzw. eine der Außenschicht abgewandte Oberfläche der Innenschicht wird in der Endanwendung häufig in einem Spritzgießprozess mit einer weiteren Schicht Kunststoff überzogen. Bei der Außenschicht und der Innenschicht handelt es sich also prinzipiell um zwei gesonderte Schichten, die unterschiedlichen Funktionen dienen, jedoch miteinander verbunden sind.

Oberflächenfolien werden häufig beim Folienhinterspritzen eingesetzt. Dabei handelt es sich um ein Spritzgießverfahren, das der Fertigung von Trägerteilen in Form von Spritzgießteilen mit dekorativen Oberflächen dient. Für das Folienhinterspritzen werden verschiedene - zumeist englischsprachige - Bezeichnungen verwendet, wie beispielsweise Insert Molding, Film Insert Molding (FIM), Inmold Decoration (IMD), Inmold Labeling (IML), Inmold Foiling (IMF), Inmold Insert (IMI), Print Mold Design (PMD) oder Paintless Film Molding (PFM).

Die dafür gemäß dem Stand der Technik eingesetzten Folien bestehen hauptsächlich aus Polycarbonat und haben typischerweise eine Dicke zwischen 100 µm und 500 µm. Diese Folien werden beispielsweise beim FIM-Verfahren auf der sogenannten Bottom-Seite bedruckt, wobei die Druckprozesse Siebdruck oder Digitaldruck oder auch andere Druckprozesse zum Einsatz kommen können. Nach dem Bedrucken mit dem eigentlichen Druckmotiv wird ein vollflächiger Haftvermittler - ein so genannter Primer - aufgebracht, der die Aufgabe hat, eine gute Haftung zur Druckfarbe auf der einen Seite und eine gute Haftung zum Kunststoff des Hinterspritzmaterials auf der anderen Seite sicherzustellen. Die bedruckte und geprimerte Folie kann anschließend umgeformt werden. Je nach Geometrie muss aber nicht zwingend umgeformt werden.

Das Umformen kann mittels Tiefziehen, Vakuumformen oder sogenanntem Highpressure Forming (HPF) erfolgen. Der so hergestellte Preform wird anschließend in die Spritzgießform eingelegt und im Spritzgießverfahren hinterspritzt. Man erhält somit ein dekoriertes Spritzgießteil, bei dem der Druck durch die Polycarbonat-Folie vor äußeren Einflüssen geschützt ist. Ein Hersteller derartiger Polycarbonat-Folien ist Covestro. Dessen Oberflächenfolien in Form von Polycarbonat-Folien sind unter dem Markennamen Makrofol® erwerbbar. Ein weiterer Hersteller ist die Firma Sabic.

Polycarbonat hat aber gewisse Nachteile in der Endanwendung, da es spannungsrissanfällig ist, d.h. wenn es in Kontakt mit Chemikalien kommt, so bilden sich kleine Mikrorisse, die schließlich zu einem vollständigen Versagen der Polycarbonat-Folie führen können. Weiters ist Polycarbonat nicht besonders kratzfest. Aus diesem Grunde gibt es Polycarbonat-Folien, welche mit einem kratzfesten Lack beschichtet sind, der die Folienoberfläche gegen Kratzer und gegen Chemikalieneinfluss schützen soll. Hersteller für derartige Oberflächenfolien, sog. formable hardcoated films, sind die Firmen MacDermid und Covestro.

Um die Verformbarkeit dieser beschichteten Folien zu gewährleisten und Risse im Lack zu vermeiden, wird der Oberflächenlack erst nach dem Umformen gehärtet, was entweder durch UV-Härtung oder durch thermische Härtung erfolgen kann. Dieser Prozessschritt erfordert aber einen zusätzlichen Aufwand. So muss die Folie bis zum Härtungsvorgang speziell geschützt werden. Im Falle von UV-härtenden Lacken muss die Folie vor UV-Strahlung geschützt werden und im Falle von thermisch-härtenden Lacken muss sie vor Wärmeeinwirkung geschützt werden, da ansonsten der Härteprozess startet bevor die Folie in ihre endgültige Form gebracht wurde, was eine Umformung ohne Lackrisse nicht möglich macht. Auch stellt das aufwändigere Umformen und der anschließende Härtungsprozess eine zusätzliche Ausschussquelle und somit eine Erhöhung der Fertigungskosten dar.

Aufgabe der Erfindung ist es, die vorbeschriebenen Nachteile zu vermeiden und eine gegenüber dem Stand der Technik verbesserte Oberflächenfolie anzugeben. Insbesondere soll die vorgeschlagene Oberflächenfolie für den Prozess des Folienhinterspritzens (z.B. nach dem FIM-Verfahren) geeignet sein und eine gegenüber dem Stand der Technik verbesserte Chemikalienbeständigkeit sowie Kratzbeständigkeit aufweisen.

Diese Aufgabe wird durch eine Oberflächenfolie mit den Merkmalen des Anspruchs 1 gelöst. Vorteilhafte Ausführungsformen der Erfindung sind in den abhängigen Ansprüchen definiert.

Bei einer erfindungsgemäßen Oberflächenfolie ist vorgesehen, dass die Außenschicht aus einem Polyamidmaterial besteht.

Unter Polyamidmaterial wird ein Material verstanden, das wenigstens ein Polyamid umfasst. Das Polyamidmaterial kann aber auch eine Mischung aus mehreren Polyamiden, auch Polyamiden verschiedener Gruppen, umfassen.

Polyamid hat sich als sehr kratz- und chemikalienbeständiges Material herausgestellt. Insbesondere haben Polyamide eine deutlich bessere Chemikalienbeständigkeit als Polycarbonat, das häufig die Außenschicht von herkömmlichen Oberflächenfolien darstellt. Werden besonders kratzfeste Polyamid-Typen verwendet, so erreicht man eine Kratzbeständigkeit, die vergleichbar zu Polycarbonat-Folien mit zusätzlicher Hardcoat-Schicht ist.

Insgesamt weist eine vorgeschlagene Oberflächenfolie also eine hohe Chemikalienbeständigkeit sowie Kratzbeständigkeit auf. Sie stellt damit insbesondere eine besonders kratz- und medienbeständige Oberflächenfolie dar. Darüber hinaus wird durch den Einsatz von Polyamid in der Außenschicht eine verbesserte Lagerbeständigkeit der Oberflächenfolie bis zur weiteren Verarbeitung erzielt, d.h. sie muss nicht speziell vor Wärme- oder UV-Einwirkung geschützt werden. Auch ein bei herkömmlichen Oberflächenfolien nötiger Härtungsprozess kann entfallen.

Vorzugsweise kann vorgesehen sein, dass das Polyamidmaterial im Wesentlichen vollständig aus wenigstens einem Polyamid besteht. Das Polyamidmaterial besteht hierbei also im Wesentlichen ausschließlich aus Polyamiden. Es kann aber durchaus sein, dass Zusatzstoffe oder Füllstoffe in einem geringen Ausmaß vorhanden sind, um Zusatzfunktionen wie beispielsweise eine verbesserte Anhaftung der Außenschicht an die Innenschicht oder eine verbesserte Kratzbeständigkeit der Außenschicht zu erzielen.

Bei einer bevorzugten Ausführungsform kann vorgesehen sein, dass das Polyamidmaterial wenigstens ein langkettiges Polyamid umfasst, wobei das wenigstens eine langkettige Polyamid vorzugsweise aus der folgenden Gruppe von Polyamiden stammt: PA11, PA12, PA1010, PA1012, PA1212, PA6.12, PA6.10. Diese Polyamide können Additive enthalten, wie beispielsweise UV-Absorber, UV-Stabilisatoren oder Wärmestabilisatoren.

Vorzugsweise kann vorgesehen sein, dass das Polyamidmaterial wenigstens ein amorphes Polyamid und/oder wenigstens ein kristallines Polyamid umfasst. Mischungen umfassend wenigstens ein amorphes Polyamid und wenigstens ein kristallines Polyamid werden üblicherweise als Polymerblend bezeichnet.

Bei dem wenigstens einen amorphen Polyamid kann es sich beispielsweise um das Polyamid mit der Bezeichnung Grilamid TR90 des Herstellers Ems handeln.

Bei dem wenigstens einen kristallinen Polyamid kann es sich um ein mikrokristallines Polyamid oder um ein teilkristallines Polyamid handeln. Ein mikrokristallines Polyamid ist z.B. das Polyamid mit der Bezeichnung Trogamid CX7323 des Herstellers Evonik. Beim wenigstens einen kristallinen Polyamid kann es sich auch um ein teilkristallines Polyamid mit aromatischen Anteilen handeln.

Gemäß einer besonders bevorzugten Ausführungsvariante kann vorgesehen sein, dass eine Außenoberfläche der Außenschicht eine Oberflächenstruktur, vorzugsweise in Form einer Prägung, aufweist. Dadurch kann die Kratzfestigkeit der Außenschicht bzw. der Außenoberfläche der Außenschicht verbessert werden. Die Oberflächenstruktur kann dabei im sogenannten Inline-Verfahren, also direkt bei der Folienextrusion, eingebracht werden. Dies kann durch strukturierte Kalanderwalzen geschehen, welche die Negativform der in der Außenoberfläche der Außenschicht einzubringenden Struktur haben.

Selbstverständlich kann aber auch vorgesehen sein, dass die Außenoberfläche der Außenschicht im Wesentlichen glatt ausgebildet ist.

Es kann auch vorgesehen sein, dass das Polyamidmaterial zur Erhöhung der Kratzbeständigkeit funktionelle Füllstoffe aufweist, vorzugsweise in Form von Glaskugeln oder mineralischen Füllstoffen.

In einer bevorzugten Ausführungsform kann vorgesehen sein, dass die Innenschicht zumindest teilweise, vorzugsweise im Wesentlichen vollständig, aus Polycarbonat besteht. Polycarbonat hat eine gute Transparenz und ist preisgünstiger als Polyamide wie beispielsweise PA11 oder PA12. Außerdem haben die häufig beim Folienhinterspritzen eingesetzten Druckfarben eine gute Haftung zu Polycarbonat. Insbesondere eignet sich eine derartige Innenschicht aus Polycarbonat zum direkten Hinterspritzen mit Polycarbonat (PC), Acrylnitril-Butadien-Styrol (ABS) sowie PC/ABS-Blends.

Vorzugsweise kann vorgesehen sein, dass die Innenschicht mittels Corona-Vorbehandlung vorbehandelt ist. Dies erhöht zusätzlich die Haftung von Druckfarben an der Innenschicht.

Bei einem bevorzugten Ausführungsbeispiel kann vorgesehen sein, dass die Außenschicht und/oder die Innenschicht transparent ausgebildet ist bzw. sind. Wenn sowohl die Außenschicht als auch die Innenschicht transparent ausgebildet sind, bleibt bei der Endanwendung das Erscheinungsbild des Trägerteils, auf dem die Oberflächenfolie aufgebracht ist, erhalten. Die Oberfläche des Trägerteils ist aber durch die Oberflächenfolie gut geschützt.

Es kann aber natürlich auch vorgesehen sein, dass die Außenschicht und/oder die Innenschicht eingefärbt ist bzw. sind.

Vorzugsweise kann vorgesehen sein, dass die Innenschicht bedruckt ist. Als Druckverfahren bei der Herstellung hinterdruckter Oberflächenfolien können z.B. Siebdruck, Digitaldruck, Offset-Druck, Flexodruck oder Sublimationsdruck zum Einsatz kommen. Es kann aber auch die Außenschicht bzw. deren Außenoberfläche bedruckt werden, wobei hier neben Farben auch Strukturlacke aufgebracht werden können.

Bei einer bevorzugten Ausführungsvariante kann vorgesehen sein, dass zur Verbindung der Außenschicht mit der Innenschicht die Außenschicht und/oder die Innenschicht wenigstens einen haftvermittelnden Bestandteil aufweist bzw. aufweisen. Der wenigstens eine haftvermittelnde Bestandteil kann dabei Maleinsäureanhydrid-modifiziertes Ethylen-Methylacrylat umfassen. Dadurch kann insbesondere bei einer Innenschicht bestehend aus Polycarbonat in einer Coextrusion eine gute Lagenhaftung erzielt werden.

Gemäß einer besonders bevorzugten Ausführungsform kann vorgesehen sein, dass zur Verbindung der Außenschicht mit der Innenschicht zwischen der Außenschicht und der Innenschicht eine Haftvermittlerschicht angeordnet ist.

Vorzugsweise kann dabei vorgesehen sein, dass die Haftvermittlerschicht wenigstens teilweise, vorzugsweise im Wesentlichen vollständig, aus Polymer besteht, welches Maleinsäureanhydrid- oder Epoxid-Gruppen enthält. Diese funktionellen Gruppen reagieren mit dem Polyamidmaterial der Außenschicht und dem Polycarbonat der Innenschicht unter Verarbeitungstemperaturen, so dass eine gute Lagenhaftung erzielt werden kann.

Es kann auch vorgesehen sein, dass die Haftvermittlerschicht wenigstens ein Polyurethan, vorzugsweise wenigstens ein aliphatisches Polyurethan, umfasst. Aliphatische Polyurethane haben den Vorteil, dass diese keine Vergilbung unter Einwirkung von UV-Strahlung aufweisen.

Besonders vorteilhaft ist es, wenn die Haftvermittlerschicht als Heißklebefolie auf Polyurethan-Basis ausgebildet ist.

Vorzugsweise kann vorgesehen sein, dass die Haftvermittlerschicht als coextrudierte Schicht auf Basis von thermoplastischem Polyurethan ausgebildet ist.

Schutz wird auch begehrt für ein Trägerteil mit einer vorgeschlagenen Oberflächenfolie.

Vorzugsweise kann vorgesehen sein, dass das Trägerteil als Formteil, vorzugsweise als dekoriertes Spritzgießteil, ausgebildet ist. Die Oberflächenfolie bildet dabei die Deckschicht des Formteils.

Die Anwendung der vorgeschlagenen Oberflächenfolie ist aber selbstverständlich nicht auf das Folienhinterspritzen beschränkt. So kann es sich beim Trägerteil beispielsweise auch um eine Platte handeln, auf welche die Oberflächenfolie auflaminiert ist.

Schutz wird auch begehrt für ein Verfahren zur Herstellung einer vorgeschlagenen Oberflächenfolie. Dabei ist vorgesehen, dass die Außenschicht in einem Coextrusionsverfahren mit der Innenschicht verbunden wird.

Vorzugsweise kann vorgesehen sein, dass zur Verbindung der Außenschicht mit der Innenschicht in die Außenschicht und/oder in die Innenschicht wenigstens einen haftvermittelnden Bestandteil, vorzugsweise Maleinsäureanhydrid-modifiziertes Ethylen-Methylacrylat, eingebracht wird. Beispielsweise geht bei einem Einbringen von Maleinsäureanhydrid-modifiziertem Ethylen-Methylacrylat in die aus einem Polyamidmaterial bestehende Außenschicht die Außenschicht in der Coextrusion eine gute Lagenhaftung mit der Innenschicht ein, insbesondere wenn diese aus Polycarbonat besteht.

In einer bevorzugten Ausführungsform kann vorgesehen sein, dass zwischen der Außenschicht und der Innenschicht eine Haftvermittlerschicht angeordnet wird, wobei die Außenschicht, die Haftvermittlerschicht und die Innenschicht im Coextrusionsverfahren miteinander verbunden werden.

Die Haftvermittlerschicht kann vorzugsweise als Heißklebefolie auf Polyurethan-Basis oder als eine coextrudierte Schicht auf Basis von thermoplastischem Polyurethan ausgebildet sein. Bevorzugter Weise werden dabei aliphatische Polyurethane verwendet, da diese keine Vergilbung unter Einwirkung von UV-Strahlung aufweisen.

Die Haftvermittlerschicht kann als Folie in einem Heißlaminierprozess mit der Außenschicht auf der einen Seite und der Innenschicht auf der anderen Seite verbunden werden.

Im vorgeschlagenen Coextrusionsverfahren wird die Haftvermittlerschicht in einer 3-Schicht Extrusionsanlage als Zwischenlage zwischen der Außenschicht und der Innenschicht extrudiert.

Besonders vorteilhaft ist es, wenn das Coextrusionsverfahren bei einer Extrusionstemperatur durchgeführt wird, bei der die Schmelzeviskositäten von Außenschicht, Haftvermittlerschicht und Innenschicht im Wesentlichen gleich hoch sind. Dadurch ergibt sich eine gleichmäßige Schichtverteilung über der Folienbreite.

Bei einer bevorzugten Ausführungsform kann vorgesehen sein, dass in eine Außenoberfläche der Außenschicht eine Oberflächenstruktur, vorzugsweise in Form einer Prägung, eingebracht wird. Die Oberflächenstruktur kann dabei im sogenannten Inline-Verfahren, also direkt bei der Folienextrusion, eingebracht werden. Dies kann durch strukturierte Kalanderwalzen geschehen, welche die Negativform der in der Außenoberfläche der Außenschicht einzubringenden Struktur haben.

Vorzugsweise kann vorgesehen sein, dass eine Außenoberfläche der Außenschicht aufgeheizt und anschließend rasch abgekühlt wird. Bei diesem sogenannten flamepolish kann die Kratzfestigkeit verbessert werden. Dabei wird die Außenoberfläche der Außenschicht mittels Flamme innerhalb sehr kurzer Zeit aufgeheizt und anschließend rasch abgekühlt, wodurch sich feine Kristallite in teilkristallinen Polyamid-Typen bilden, welche abriebbeständiger sind als grobe Kristallite.

Gemäß einem weiteren Ausführungsbeispiel kann vorgesehen sein, dass die Innenschicht mittels Corona-Vorbehandlung vorbehandelt wird. Dies erhöht insbesondere die Haftung von Druckfarben an der Innenschicht.

Weitere Einzelheiten und Vorteile der vorliegenden Erfindung werden anhand der nachfolgenden Figurenbeschreibung erläutert. Dabei zeigen:
- Fig. 1: ein erstes Ausführungsbeispiel einer vorgeschlagenen Oberflächenfolie,
- Fig. 2: ein zweites Ausführungsbeispiel einer vorgeschlagenen Oberflächenfolie und
- Fig. 3: ein Beispiel eines Trägerteils mit einer vorgeschlagenen Oberflächenfolie.

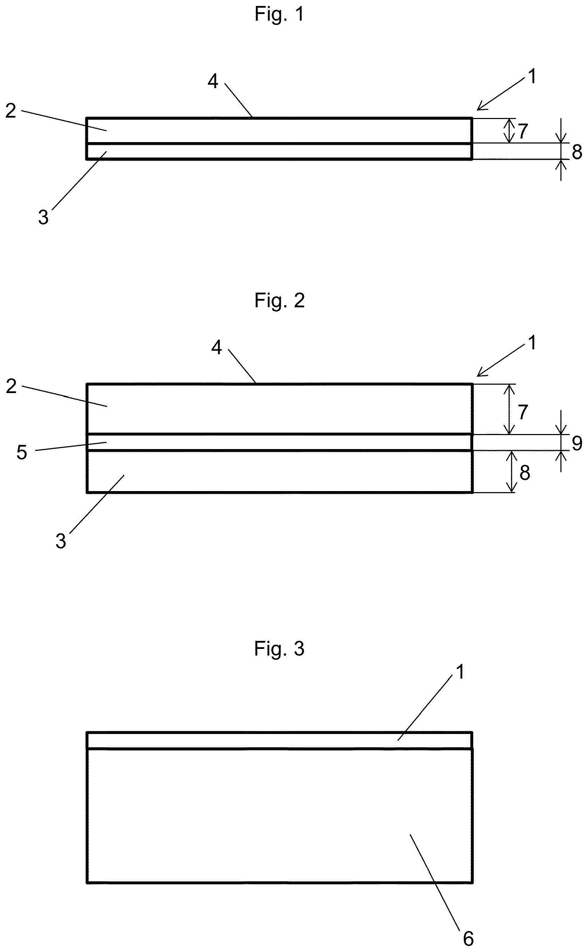

Figur 1 zeigt schematisch ein erstes Ausführungsbeispiel einer vorgeschlagenen Oberflächenfolie 1, die in diesem Fall zweilagig aufgebaut ist. Die Oberflächenfolie 1 umfasst eine Außenschicht 2 und eine unmittelbar mit der Außenschicht 2 verbundene Innenschicht 3.

Die Außenschicht 2 besteht aus einem Polyamidmaterial und die Innenschicht 3 besteht in diesem Beispiel aus Polycarbonat.

Zur Verbindung der Außenschicht 2 mit der Innenschicht 3 weist in diesem Beispiel die Außenschicht 2 wenigstens einen haftvermittelnden Bestandteil in Form von Maleinsäureanhydrid-modifiziertem Ethylen-Methylacrylat auf.

Zur Erhöhung der Kratzfestigkeit weist eine Außenoberfläche 4 der Außenschicht 2, welche die Oberflächenfolie 1 nach außen bzw. zur Umgebung hin begrenzt, eine Oberflächenstruktur in Form einer Prägung auf.

Eine erste Schichtdicke 7 der Außenschicht 2 liegt vorzugsweise zwischen 10 µm und 500 µm. Eine zweite Schichtdicke 8 der Innenschicht 3 liegt vorzugsweise zwischen 10 µm und 500 µm.

Die Oberflächenfolie 1 wurde in einem Coextrusionsverfahren hergestellt, wobei zur Verbindung der Außenschicht 2 mit der Innenschicht 3 der haftvermittelnde Bestandteil in diesem Beispiel in die Außenschicht 2 eingebracht wurde.

Figur 2 zeigt schematisch ein zweites Ausführungsbeispiel einer vorgeschlagenen Oberflächenfolie 1, die in diesem Fall dreilagig aufgebaut ist. Die Oberflächenfolie 1 umfasst eine Außenschicht 2 und eine über eine Haftvermittlerschicht 5 mit der Außenschicht 2 verbundene Innenschicht 3.

Mittels Coextrusion wurde die Oberflächenfolie 1 mit einer Außenschicht 2 aus Polyamid 12 (Type: Grilamid L25LM, Hersteller: Ems), mit einer mittleren Haftvermittlerschicht 5 aus einem Terpolymer aus Ethylen, Acrylsäure und Maleinsäureanhydrid (Type: Lotader 4613, Hersteller: Arkema) und einer Innenschicht 3 aus Polycarbonat (Type: Makroion ET2613, Hersteller: Covestro) hergestellt. Die Außenschicht 2 hat dabei eine erste Schichtdicke 7 von etwa 125 µm, die Haftvermittlerschicht 5 hat in diesem Beispiel eine dritte Schichtdicke 9 von etwa 25 µm (die dritte Schichtdicke 9 der Haftvermittlerschicht 5 liegt vorzugsweise zwischen 5 µm und 100 µm) und die Innenschicht 3 hat eine zweite Schichtdicke 8 von etwa 105 µm. Diese 3-Schichtfolie lässt sich auf der Innenschicht 3 mit den gängigen Farbsystemen für Polycarbonat (bspw. Noriprint PS, Hersteller: Pröll) bedrucken. Die Außenschicht 2 ist auch gegenüber aggressiven Reinigungsmitteln, wie bspw. Aceton, gut beständig.

Figur 3 zeigt schematisch ein Beispiel eines Trägerteils 6 mit einer daran angebrachten Oberflächenfolie 1, welche beispielsweise gemäß Figur 1 oder gemäß Figur 2 aufgebaut sein kann. Beim Trägerteil 6 handelt es sich in diesem Beispiel um ein Formteil in Form eines dekorierten Spritzgießteils.

## Patentansprüche

1. Oberflächenfolie (1) mit einer Außenschicht (2) und einer mit der Außenschicht (2) verbundenen Innenschicht (3), **dadurch gekennzeichnet, dass** die Außenschicht (2) aus einem Polyamidmaterial besteht.

2. Oberflächenfolie nach Anspruch 1, **dadurch gekennzeichnet, dass** das Polyamidmaterial im Wesentlichen vollständig aus wenigstens einem Polyamid besteht.

3. Oberflächenfolie nach Anspruch 1 oder 2, **dadurch gekennzeichnet, dass** das Polyamidmaterial wenigstens ein langkettiges Polyamid umfasst, wobei das wenigstens eine langkettige Polyamid vorzugsweise aus der folgenden Gruppe von Polyamiden stammt: PA11, PA12, PA1010, PA1012, PA1212, PA6.12, PA6.10.

4. Oberflächenfolie nach einem der Ansprüche 1 bis 3, **dadurch gekennzeichnet, dass** das Polyamidmaterial wenigstens ein amorphes Polyamid und/oder wenigstens ein kristallines Polyamid umfasst.

5. Oberflächenfolie nach einem der Ansprüche 1 bis 4, **dadurch gekennzeichnet, dass** eine Außenoberfläche (4) der Außenschicht (2) eine Oberflächenstruktur, vorzugsweise in Form einer Prägung, aufweist.

6. Oberflächenfolie nach einem der Ansprüche 1 bis 5, **dadurch gekennzeichnet, dass** die Innenschicht (3) zumindest teilweise, vorzugsweise im Wesentlichen vollständig, aus Polycarbonat besteht.

7. Oberflächenfolie nach einem der Ansprüche 1 bis 6, **dadurch gekennzeichnet, dass** die Außenschicht (2) und/oder die Innenschicht (3) transparent ausgebildet ist bzw. sind.

8. Oberflächenfolie nach einem der Ansprüche 1 bis 7, **dadurch gekennzeichnet, dass** zur Verbindung der Außenschicht (2) mit der Innenschicht (3) die Außenschicht (2) und/oder die Innenschicht (3) wenigstens einen haftvermittelnden Bestandteil aufweist bzw. aufweisen, wobei vorzugsweise der wenigstens eine haftvermittelnde Bestandteil Maleinsäureanhydrid-modifiziertes Ethylen-Methylacrylat umfasst.

9. Oberflächenfolie nach einem der Ansprüche 1 bis 8, **dadurch gekennzeichnet, dass** zur Verbindung der Außenschicht (2) mit der Innenschicht (3) zwischen der Außenschicht (2) und der Innenschicht (3) eine Haftvermittlerschicht (5) angeordnet ist, wobei vorzugsweise die Haftvermittlerschicht (5) wenigstens teilweise, vorzugsweise im Wesentlichen vollständig, aus Polymer besteht, welches Maleinsäureanhydrid- oder Epoxid-Gruppen enthält.

10. Oberflächenfolie nach Anspruch 9, **dadurch gekennzeichnet, dass** die Haftvermittlerschicht (5) wenigstens ein Polyurethan, vorzugsweise wenigstens ein aliphatisches Polyurethan, umfasst.

11. Oberflächenfolie nach Anspruch 9 oder 10, **dadurch gekennzeichnet, dass** die Haftvermittlerschicht (5) als Heißklebefolie auf Polyurethan-Basis ausgebildet ist.

12. Oberflächenfolie nach einem der Ansprüche 9 bis 11, **dadurch gekennzeichnet, dass** die Haftvermittlerschicht (5) als coextrudierte Schicht auf Basis von thermoplastischem Polyurethan ausgebildet ist.

13. Trägerteil (6) mit einer Oberflächenfolie (1) nach einem der Ansprüche 1 bis 12, wobei vorzugsweise das Trägerteil (6) als Formteil, besonders bevorzugt als dekoriertes Spritzgießteil, ausgebildet ist.

14. Verfahren zur Herstellung einer Oberflächenfolie (1) nach einem der Ansprüche 1 bis 12, **dadurch gekennzeichnet, dass** die Außenschicht (2) in einem Coextrusionsverfahren mit der Innenschicht (3) verbunden wird.

15. Verfahren nach Anspruch 14, **dadurch gekennzeichnet, dass** zur Verbindung der Außenschicht (2) mit der Innenschicht (3) in die Außenschicht (2) und/oder in die Innenschicht (3) wenigstens einen haftvermittelnden Bestandteil, vorzugsweise Maleinsäureanhydrid-modifiziertes Ethylen-Methylacrylat, eingebracht wird.

16. Verfahren nach Anspruch 14 oder 15, **dadurch gekennzeichnet, dass** zwischen der Außenschicht (2) und der Innenschicht (3) eine Haftvermittlerschicht (5) angeordnet wird, wobei die Außenschicht (2), die Haftvermittlerschicht (5) und die Innenschicht (3) im Coextrusionsverfahren miteinander verbunden werden, wobei vorzugsweise das Coextrusionsverfahren bei einer Extrusionstemperatur durchgeführt wird, bei der die Schmelzeviskositäten von Außenschicht (2), Haftvermittlerschicht (5) und Innenschicht (3) im Wesentlichen gleich hoch sind.

17. Verfahren nach einem der Ansprüche 14 bis 16, **dadurch gekennzeichnet, dass** in eine Außenoberfläche (4) der Außenschicht (2) eine Oberflächenstruktur, vorzugsweise in Form einer Prägung, eingebracht wird.
